# EUROPEAN PATENT APPLICATION

(11) **EP 4 235 903 A1**
(43) Date of publication of application: **30.08.2023**
(21) Application number: 22020130.5
(22) Date of filing: 25.03.2022
(51) Int. Cl.: H01M 10/42, H01M 50/213, H01M 50/249, H01M 50/284

(54) **DETACHABLE POWER SUPPLY FOR UAV**

(30) Priority: 24.02.2022 US 202217652360
(71) Applicant: Microavia International Limited, D04 Dublin 4 (IE)
(72) Inventor: Biriuk, Ivan, 194017 Saint Petersburg (RU); Maksimov, Denis, 197372 Saint Petersburg (RU)
(74) Representative: Ivanov, Ivan Nikolov

(57) **Abstract**

The present disclosure relates to a detachable power supply for UVA. A battery pack has two or more bonded battery cells installed at opposite poles with respect to each other. The battery pack may have switch plates connected for combining all battery cells into one electrical circuit. The power supply control board (PCB) may be connected to the battery pack through one or more contact plates made up of alloy. The battery cell terminals may be welded to the first surface of the contact plates. Second surface of the contact plates may be soldered to the PCB. PCB may contain switch knobs and power supply charge indicator functionalities. PCB may also have a set of pins that may be used to install and commission the power supply at UVA quickly and efficiently.

## Description

### TECHNICAL FIELD

1. The present disclosure generally relates to systems and methods for powering Unmanned Aerial Vehicle (UAV). In particular, the present disclosure relates to a detachable power supply for commissioning of UAV.

### BACKGROUND

2. For many decades, aircraft have been implemented for a variety of uses as means of transportation, reconnaissance, and warfare. Different types of aircraft have been historically implemented for different purposes. Amongst variety of the aircrafts, Vertical Take-off and Landing (VTOL) aircraft are typically used for operations where speed is not necessarily required. One example of VTOL is Unmanned Aerial Vehicle (UAV) which is piloted autonomously or remotely or by using both pilot methods. The UAV is utilized in multiple applications, such as surveillance, image capturing, traffic management, delivery or transportation systems, entertainment shows and the like. UAV, typically, are lightweight, small in size and remotely controlled devices which make them best suited for many day-today applications. Most drones will be battery-driven, because battery technology is becoming cost competitive and improving rapidly, enabling batteries to store more energy while decreasing in size and weight.

3. However, batteries also suffer from limitations that relate to the fact that batteries have limited power storage capacities and flying drones consume energy rapidly. The combined limitations relating to batteries storing limited amounts of power and the high energy consumption rates of drones mean that drones frequently have to swap a nearly depleted battery with a freshly charged battery so they may continue flying. Drones have to stop (i.e., park) when they require a fresh battery. The battery replacement becomes more troublesome, especially, when multiple batteries are employed.

4. Replaceable battery pack is an emerging technology that offers simplicity and convenience of replacing the batteries as well as reduces weight of the power supply. Further, compactness of the power supply reduces inertia of the drone along the drone motion axes, and thus, increases the flight time. Though useful for single drones, the battery pack may have some limitations when used for drone flocks. In drone shows or group missions, replacing and recharging the batteries can take a long time. Furthermore, as precautionary measurement, the drones are transported and stored in a collapsible state, when the power supplies are separated from a copter body. Separate storage of the power supplies ensures safety of transportation and storage; and eliminates discharge of batteries and the risk of damaging the drone, for example, in case of emergency heating or battery explosion. Separating the power supply after the flight and placing it again before the flight increases flight preparation time.

5. As known in the art, in drones, power is supplied mainly to a propulsion Unit and a power consumption unit. The propulsion unit mainly includes one or more rotors configured to generate lift for the UAV. The power consuming unit includes, in non-exhaustive way, a global positioning system (GPS) sensor, motion sensor, inertial measurement unit sensor, proximity sensor, image sensor, controllers, lights, and the like. According to the requirement, specifically, of the propulsion unit, calculations of the propeller group based on the weight, maximum speed, and latitude, number of motors, and the resource intensity of the drone's control elements highly influence the different characteristics of the battery requirements. According to the requirements, one or more battery or battery cells can be employed to power the drone. These battery cells can be combined in one group. If not, then charging and changing each battery will complicate the process of preparing the drone for the flight by several folds more as each battery cell will need to be replaced and recharged separately and individually.

6. In one solution known in the art, the battery cells are combined in a group using contact plates and cables; and are charged in the group. However, even this solution complicates the pre-flight preparation of multiple drones due to the requirement of connecting the contacts of the power supplies to the power bus of the drone. Next problem of switching the battery cells in the group to the control board arises. Excess heating of the battery cell also may lead the battery pack to failure. As the built-in protection will work, the battery cells must not be soldered. Special crimp contacts may be used, but high resistance of these contacts will shorten the battery life as it will discharge faster to heat the contacts.

7. The location of the battery cells in a group is crucial. All battery groups must be identical in geometry in order to accurately mount the power supply to the drone. If the groups of batteries differ from each other, then the error in the accuracy of drone control will increase due to the shift in the centre of gravity of the drone. The arrangement of battery cells in a group should be as compact as possible, i.e., the dimensions of a group of cells along all axes should be minimized, which will reduce the difference in inertial calculations when moving and changing the direction of movement along different axes.

8. Therefore, a design is necessary to present a solution of combining a group of battery cells into a battery group using contact boards and a control board with ability to quickly disconnect the power supply unit from the drone, charge all battery cells simultaneously through a contact switch, eliminates substantial energy losses during switching and provides improved flight performance due to the compactness and minimum weight of the power supply.

### SUMMARY

9. The present disclosure, in particular, relates to a detachable power supply for UAV, in accordance with various embodiments. UAV mainly includes the propulsion unit and the power consumption unit. The Propulsion unit may control a number of rotors configured to lift the UAV. The power consumption unit may have been in control of multiple functionalities performed by UAV, such as different sensor units, LED or flash-lights units and the like. The propulsion unit and the power consumption unit are powered by a detachable power supply unit. The detachable power supply unit mainly includes at least two battery cells bonded in a battery group, contact plate, and power supply control board. The battery pack is electrically coupled to the power supply control board through the contact plate. 10. In some embodiments, a detachable power supply unit comprising at least two battery cells bonded to form at least one battery pack. In each battery pack, there may be two or more battery cells bonded by adhesive tape, glue, or such attaching means. In the embodiment, a first battery cell from amongst the at least two battery cells and a second battery cell from amongst the at least two battery cells are installed at opposite poles with respect to each other. As each battery cell has positive polarity at one terminal and negative polarity at another terminal. All battery cells in the groups are installed in such a way that each battery cell will be installed at opposite polarities with respect to previously installed battery cells. For example, if there are three battery cells bonded in the group. At one end of the battery pack, negative polarities of two battery cells and positive polarity of one battery cell may be connected. At the other end of the battery pack, positive polarities of two battery cells and negative polarity of one battery cell may be connected.

11. In some embodiments, at least two battery cells are bonded to have a minimum distance in between. Each battery cell in the battery packs, there may be more than three battery cells, are bonded together to minimize the distance between them and present a compact battery pack. In some embodiments, each battery cell is located to provide the minimum dimensions of at least one group and bonded cells in aggregate in all directions.

12. According to some embodiments, one or more switch plates 10, 11 are implemented to complete an electrical circuit between the battery cells and switch the battery cells ON and OFF. The switch plates 10, 11 with first side soldered to the control board and connected to the corresponding power channels on the control board and second side welded to the second side cell contacts to provide a low resistance contact and secure battery cells fastening.

13. According to some embodiments, the detachable power supply unit further contains a power supply control board. The power supply control board may be implemented on a printed circuit board (PCB), in one implementation. The PCB may include a switch knob for switching the detachable power supply unit On or OFF, and a switching circuit that breaks the power supply circuit when the power supply is installed. The power supply board may further include a power supply charge indicator for displaying a charge level of all battery cells from the at least one battery pack in the power supply in aggregate. The power supply control board may further include a set of pin contacts for the power supply unit connection. The set of pin contacts may be a structure having multiple pins aligned in the same plane to allow immediate insertion and commissioning of the power supply unit onto the UAV. With fixing the set of pins at a predetermined location, power contacts can be established right after.

14. According to some embodiments, contact plates in the detachable power supply unit are provided to mediate the battery pack and the power supply control board. In one embodiment, the battery pack is welded to the contact plates. The contact plates may be made up of an alloy and soldered to the Power supply control board. In one implementation, a first surface of a first contact plate electrically coupled to the first battery cell, and a first surface of a second contact plate electrically coupled to the second battery cell. The coupling may be achieved by welding methods. By establishing the contact, the contact plate may combine all battery cells into one electrical circuit. The second side of the contact plate may be soldered to the PCB and configured to provide electrical contact between the battery cells and the PCB.

### BRIEF DESCRIPTION OF THE DRAWINGS

15. The foregoing and other objects, aspects, features, and advantages of the disclosure will become more apparent and better understood by referring to the following description taken in conjunction with the accompanying drawings, in which:
16. FIG. 1 depicts a block diagram depicting a generic block diagram of a power supply unit connected to UVA, according to some embodiments;
17. FIG. 2 illustrates a functional diagram of a detachable power supply unit, according to some embodiments;
18. FIG. 3 illustrates a top view of structure of PCB, according to some embodiments;
19. FIG. 4 illustrates a side view of a battery pack, according to some embodiments; and
20. FIG. 5 illustrates a top view of PCB with functional components embedded on it, according to some embodiments

### DETAILED DESCRIPTION

21. The embodiments will now be described more fully hereinafter with reference to the accompanying figures, in which preferred embodiments are shown. The foregoing may, however, be embodied in many different forms and should not be construed as limited to the illustrated embodiments set forth herein. Rather, these illustrated embodiments are provided so that this disclosure will convey the scope to those skilled in the art.

22. To provide an overall understanding of the systems and methods described herein, certain illustrative embodiments will now be described, including systems and methods for storing trusted data at a cloud storage service. However, it will be understood that the systems and methods described herein may be adapted and modified as is appropriate for the application being addressed and that the systems and methods described herein may be employed in other suitable applications, and that such other additions and modifications will not depart from the scope thereof.

23. The systems, devices, and methods of the present disclosure, according to some embodiments, provides a detachable power supply unit for an unmanned aerial vehicle (UAV). Description of the UAV may be applied to any other type of unmanned vehicle, or any other type of controlled flying object. In one scenario, the power supply unit may be rechargeable and may be recharged by establishing power contact between an energy provision station and the UAV. For example, the power supply unit may be powered by a rechargeable battery which may be recharged while onboard the UAV or removed from the UAV prior to recharging. The energy provision station may exchange the battery onboard the UAV for another battery. The energy provision station may store one or more batteries. In another example, the power supply unit may be a replaceable unit. The energy provision station may have stored one or more battery packs. Upon depletion of the current battery pack or at the time of pre-flight preparation, the current battery pack may be replaced by a charged battery pack.

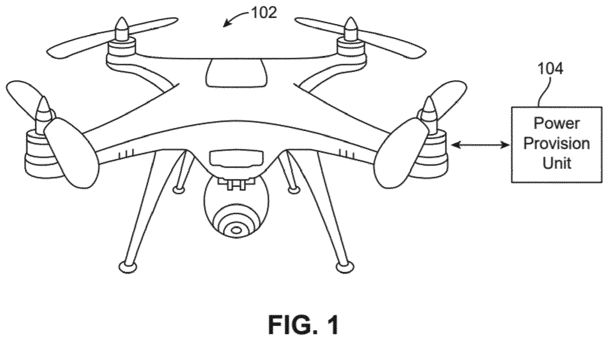

24. FIG. 1 shows an example of an unmanned aerial vehicle (UAV) that may be associated with an energy provision station 104, according to some embodiments. The energy provision station 104 may be a power station having a physical location and power storage to store battery packs, batteries, recharging stations, or any other means for supplying energy to the UAV 102. The UAV 102 may land on or take off from the energy provision station 104. According to the embodiment, the UAV 102 and an energy provision station 104 are communicatively coupled to each other. The UAV 102 may be adapted to identify and communicate with the energy provision station 104 as required.

25. In one implementation, the UAV 102 may be any type of unmanned movable object (e.g., which may traverse the air, land, water, or space). The UAV 102 may be capable of responding to commands from a remote controller. The remote controller may be not connected to the UAV 102, the remote controller may communicate with the UAV 102 wirelessly from a distance. In some instances, the UAV 102 may be capable of operating autonomously or semi-autonomously. The UAV 102 may be capable of following a set of pre-programmed instructions. In some instances, the UAV 102 may operate semi-autonomously by responding to one or more commands from a remote controller while otherwise operating autonomously. For instance, one or more commands from a remote controller may initiate a sequence of autonomous or semi-autonomous actions by the UAV 102 in accordance with one or more parameters.

26. In one implementation, the UAV 102 may be an aerial vehicle. The UAV 102 may have one or more propulsion units that may permit the UAV 102 to move about in the air. The one or more propulsion units may enable the UAV 102 to move about one or more degrees of freedom. In some instances, the UAV 102 may be able to rotate about three axes of rotation. The axes of rotation may be orthogonal to one another. The axes of rotation may remain orthogonal to one another throughout the course of the UAV 102's flight. The axes of rotation may include a pitch axis, roll axis, and/or yaw axis. The UAV 102 may be able to move along one or more dimensions. For example, the UAV 102 may be able to move upwards due to the lift generated by one or more rotors. In some instances, the UAV 102 may be capable of moving along a Z axis (which may be up relative to the UAV 102 orientation), an X axis, and/or a Y axis (which may be lateral). The UAV 102 may be capable of moving along one, two, or three axes that may be orthogonal to one another.

27. The UAV 102 may be a rotorcraft. In some instances, the UAV 102 may be a multi-rotor craft that may include a plurality of rotors. The plurality or rotors may be capable of rotating to generate lift for the UAV 102. The rotors may be propulsion units that may enable the UAV 102 to move about freely through the air. The rotors may rotate at the same rate and/or may generate the same amount of lift or thrust. The rotors may optionally rotate at varying rates, which may generate different amounts of lift or thrust and/or permit the UAV 102 to rotate. In some instances, one or more rotors may be provided on a UAV 102. The rotors may be arranged so that their axes of rotation are parallel to one another. In some instances, the rotors may have axes of rotation that are at any angle relative to one another, which may affect the motion of the UAV 102.

28. The UAV 102 may include one or more components configured to perform one or more operations. Main components include propulsion units and power consumption unit. Examples of other components may include, but are not limited to an on-board controller, data storage unit, communication unit, sensors, carrier payload, and/or any other component. Any combination of components described herein may be provided on board the UAV 102. One or more components may receive power from the power supply unit implemented on the UAV 102.

29. In some embodiments, the UAV 102 may have the power supply unit implemented on it. The power supply unit may include one or more battery cells. In some instances, the power supply unit may be a battery pack. The battery pack may include one or more batteries connected in series, in parallel, or any combination thereof. The power supply unit may power the one or more components of UAV 102.

30. One or more battery cells may be having any battery chemistry known or later developed in the art, in accordance with some embodiments. In some instances, batteries may be lead acid batteries, valve regulated lead acid batteries (e.g., gel batteries, absorbed glass mat batteries), nickel-cadmium (NiCd) batteries, nickel-zinc (NiZn) batteries, nickel metal hydride (NiMH) batteries, or lithium-ion (Li-ion) batteries. In some embodiments, battery is a multi-cell (e.g., 2S, 3S, 4S, etc.) lithium polymer battery, lithium-ion, lead-acid, nickel-cadmium, or alkaline battery. Other battery types and variants can be used as known in the art. The battery cells may be packaged together as a single unit or multiple units. The batteries may be rechargeable batteries.

31. The power supply unit can be securely mounted to the UVA. In some embodiments, the power supply unit may have a release mechanism. In some embodiments, the power supply unit may be automatically replaced. For example, UAV 102 may land on a docking station and the docking station may automatically remove a discharged battery and insert a charged battery. In some embodiments, UAV 102 may pass through docking station and replace battery with or without stopping.

32. The battery packs of the power supply unit may be in fully charged or partially charged state when they are swapped out with a depleted battery of the UAV 102. In some instances, an assessment may be made of the state of charge of the battery of the UAV 102. In some embodiments, depending on the state of charge, the UAV 102 battery may be recharged, or the UAV 102 battery may be replaced with a new one. In some implementations, the state of charge of the new batteries may be assessed as well.

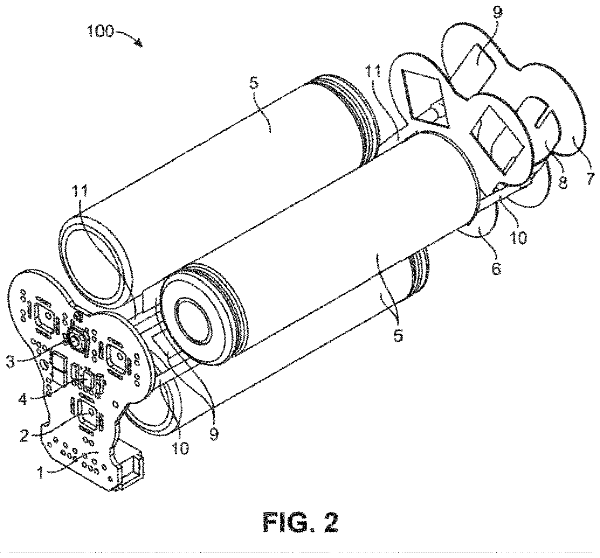

33. Fig. 2 depicts a detachable power supply unit, in accordance with some embodiments. As described in conjunction with Fig. 1, the power supply unit may include a battery pack having one or more battery cells. In the embodiment, as illustrated by Fig. 2, a first end of the battery pack may be electrically coupled to a power supply control board. The first end of the battery pack may refer to one terminal of the battery cells of the battery pack. For example, battery pack A is formed with three battery cells, referred to as battery cell1, battery cell B, and battery cell C. At the first end of the battery pack, positive terminals of the two battery cells and negative terminal of one battery cell 5may be included. Particularly, with reference to the example, positive terminals of battery cell A and battery cell C, and negative terminal of battery cell B may form the first end of the battery pack A. The second end of the battery pack may be formed with remaining terminals of the battery cells. i.e., negative terminals of battery cell A and battery cell C, and positive terminal of battery cell B. The first end of the battery pack may be coupled to the PCB 1, whereas the second end of the battery pack may also be coupled to the PCB 1 by means of switch plates 10, 11. The switch plates 10, 11, made up of metal, alloy and any conductive combination thereof, may be configured to switch battery cells and combine all battery cells into one electrical circuit on one side of the battery cells.

34. In some embodiments, the power supply control board may be a printed Circuit Board (PCB) fabricated to employ one or more functional components of the power supply unit and form an electrical circuit of the battery pack. In one implementation, one or more distributed electronic components may be printed on the PCB 1. The PCB 1 may have electrical bus layers for distributing electrical power for driving the electric components. One end of the battery pack may be electrically coupled to the PCB 1 by means of the contact plates 2. As described earlier, the one end of the battery pack may be soldered to the contact plates 2 where the contact plates 2 are embedded in the PCB 1. Thus, the battery pack is coupled to the tap on the electrical bus on the PCB 1 to provide power to the electrical bus. The electrical or power bus may transmit the electrical charges/ power drawn from the battery pack to the functional components embedded on the PCB 1. Few examples of the function components may be a sensor or actuator attached to the electrical or power bus of the PCB 1 that can provide input and output capability to the control system.

35. In some embodiments, some functional components (i.e., the components that can accomplish multiple tasks, operations, functionalities that the UVA is configured to perform) may be located at mother boards or microcontroller units of the UAV 102, and some functional components of UAV 102 may be embedded on the PCB 1. In one example, the functional component embedded on the PCB 1 may be a switch knob and a switching circuit. The switch knob, as its name indicates, may be a switch to ON and OFF the power supply control board. The switching circuit may break the power supply circuit of the UAV 102 when the power supply is installed on the UAV 102.

36. In some embodiments, another functional component may be a power supply charge indicator 4. The power supply charge indicator 4 may display the charge level of all battery cells in the power supply in the aggregator.

37. In some embodiments, a set of pin contacts may be fabricated on the PCB 1 for facilitating quick installation of the power supply unit in the UAV 102. As described earlier, installation and commissioning in the UAV 102 of any power supply could be a time-consuming task as setting up electrical connections between power buses of the power supply and the UAV 102 may take longer duration. The set of pins 12, as disclosed herein, eliminates the need of establishing electrical connections between the power buses of the power supply and the UAV 102, and rather, the set of pins 12 may have been electrically coupled with the power buses embedded on the PCB 1. Therefore, fastening the set of pins 12, by means of insertion or attachment, to the UVA motherboard, microcontroller unit or any unit that requires power from the power supply may establish electrical connection without having to couple power buses separately and individually.

38. The set of pins 12, in one implementation, may be formed by aligning one or more pins in one plane.

39. In some embodiments, the PCB 1 may be embedded with the contact plates 2.

The contact plates 2 may be an electrical contact region which functions as a conducting medium provided to electrically couple the battery pack and the PCB 1. In one implementation, the contact plates 2 may be the electrical contact region configured to facilitate conductive charging and / or inductive charging of the battery pack. For example, each battery cell 5 from the battery pack of UAV 102 may be soldered and coupled to the electrical contact region provided by each contact plate 2. One contact plate 2 may correspond to one battery cell. In one example, one end of any battery cell 5 may be soldered to one contact plate 2 by soldering at six contact points. It would be understood in the art that the example of six contact points is non limiting, and based on different implementations and configurations, a set of contact points can be defined. Location and number of contact points may vary in multiple implementations. Referring to the implementation in which an aspect of the contact plates 2 facilitating electrical coupling was described, UAV 102 may be electrically coupled to UAV 102 charging station (not shown in the figure), electrical contact area may provide an electrical path between the battery pack and the UAV 102 charging station.

40. In some embodiments, the contact plates 2 may be embedded on the PCB 1 by means of soldering. Based on the number of battery cells in the battery pack, the number of contact plates 2 may be embedded on the PCB 1. As the contact plates 2 are electrically coupled to the battery pack on the first side, and have the second side embedded on the PCB 1, the contact plates 2 provide electrical coupling between the PCB 1 and the battery pack. In one implementation, the first side of the contact plates 2 are welded to the battery back, and the second side of the contact plates 2 are soldered to the PCB 1. Power drawn from the battery pack may be transmitted to the requirement functioning components from power buses embedded on the PCB 1. It should be understood in the art that the electrical contact region may be configured to electrically couple and facilitate power transmission with any component of UAV 102 configured to receive electrical charge.

41. In some embodiments, the contact plates 2 may be made up of metal, alloy, and any conductive combination thereof. Conductive nature of the contact plates 2 ensures effective power transmission from the battery pack to the PCB 1. Moreover, as the contact plates 2 are employed by means of soldering, and not by means of mechanical fastening, the contact plates 2 render a more effective conducting medium and avoids disadvantages associated with mechanical coupling, such as fastening failure.

42. As described earlier in reference to Fig.2, the first end of the battery pack is electrically coupled to the PCB 1, whereas the second end of the battery pack is encapsulated with contact insulators. Second terminals of battery cells installed within the battery pack are welded at the back side of the first contact insulator 6. In one implementation, all positive battery terminals may be connected at positive contact terminal 8, and all negative battery terminals may be connected at negative contact terminal 9. The switch plates 10, 11 connect the first terminal of the battery cells with the second terminal of battery cells via one or more conductive cables. For example, in the example of battery pack A, three battery cells, referred to as battery cell A, battery cell B, and battery cell C, are connected. At the first end of the battery pack A, positive terminals of the two battery cells and negative terminal of one battery cell 5 may be included. Particularly, with reference to the example, positive terminals of battery cell 5 1 and battery cell C, and negative terminal of battery cell B may form the first end of the battery pack A. The second end of the battery pack may be formed with remaining terminals of the battery cells. i.e., negative terminals of battery cell A and battery cell C, and positive terminal of battery cell B. Negative terminals of battery cell A and battery cell B may be welded together at the back of the first contact insulator 6. Positive terminal of the battery 3 may be welded at the back of the first contact insulator 6.

43. In accordance with some embodiments, the switch plate is configured to form an electrical circuit between both ends of the battery cells using conductive medium, such as conductive cables. For example, a first switch plate may be configured to form an electrical circuit between the positive terminal of the battery cell A, connected at the first end of the battery pack A, and the negative terminal of the battery cell A, connected at the second end of the battery pack A. A second switch plate may be configured to form an electrical circuit between the negative terminal of the battery cell B, connected at the first end of the battery pack A, and the positive terminal of the battery cell B, connected at the second end of the battery pack A. A third switch plate may be configured to for electrical circuit between positive terminal of the battery cell C, connected at the first end of the battery pack A, and negative terminal of the battery cell C, connected at the second end of the battery pack A. Welding the second terminals at the back of the first contact insulator 6 ensure further fastening of the battery cells 5 along with effective safety insulation.

44. In accordance with some embodiments, a second contact insulator 7 is provisioned to encapsulate the first contact insulator 6 with confined second terminals of the battery cells.

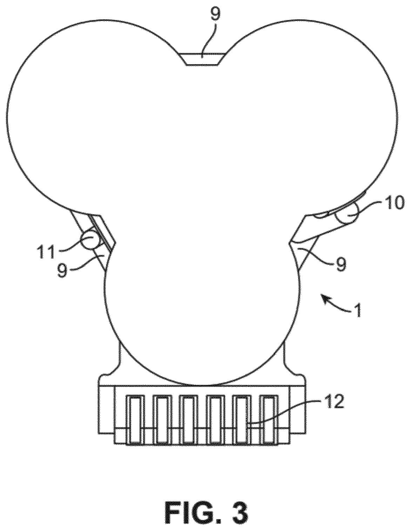

45. Fig. 3 depicts the top view of a structure of the power supply control board, in accordance with some embodiments. It may be understood that the illustration is for description purpose only and should be viewed and considered in a non-limited way. In one implementation, the PCB 1 of the power supply control board may be of approximately around 36.8 cm wide and 39.8 cm high. In another implementation, the PCB 1 of the power supply control board may be of approximately around 36.8 cm high and 39.8 cm wide. The approximate dimensions are calculated based on the number of battery cells, functional components embedded within the PCB 1, and other distributed electronic components. Therefore, the dimensions of the PCB 1 may vary based on different applications and implementations.

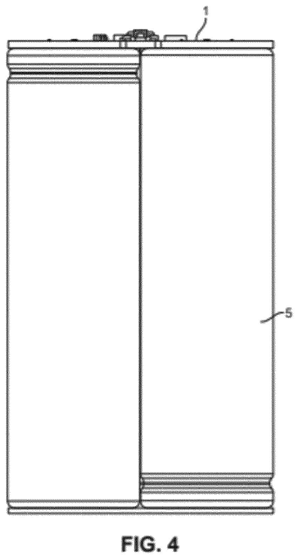

46. Fig. 4 depicts a side view of battery cells 5 forming the battery pack. As described in conjunction with Fig. 1, the battery cells 5 may be of different characteristics, sizes, and shapes. In one preferable embodiment, the battery cells 5 may be of cylindrical shape with approximately around 66.6cm high. The battery pack is formed by placing battery cells 5 at minimum distance from each other for compactness. Polarity terminals of each battery cell may be installed in the opposite direction with reference to the previous battery cell. For example, the positive terminal of battery cell A may be connected at the first end of the battery cell, and the negative terminal of battery cell A may be connected at the second of the battery pack. The next battery cell, i.e., battery cell B may have opposite polarity direction with respect to battery cell A. In that case, the negative terminal of battery cell B may be connected to the first end of the battery pack, and the positive terminal of the battery cell B may be connected to the second end of the battery pack. According to several embodiments, the battery cells 5 may be bonded together using adhesive means, such as adhesive tape, glue, and the like. The battery cells 5 are bonded together in different structures to render compact and small dimensional battery packs. In one preferred embodiment, the battery cells 5 may be bonded together in pyramid shaped structure.

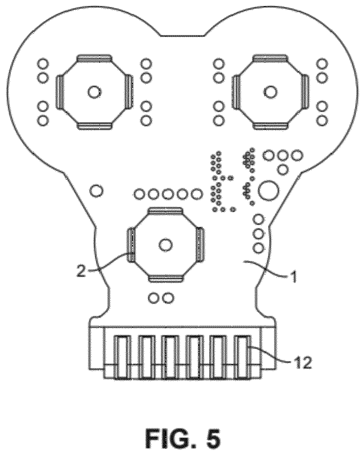

47. Fig. 5 depicts a top view of the power supply control board, according to some embodiments. The PCB 1 of the power supply control board may have one or more embedded functional components, distributed electronic components, electrical buses, power buses, one or more indicator 4s, switches, and such components. In a non-limiting example, the PCB 1 may include three contact plates 2 to be coupled with three battery cells. Each contact plate 2 may include one or more contact points where the battery cell terminals may be soldered. In one example, each contact plate 2 may be soldered to the battery cell terminal along six contact points. The PCB 1 may include a switch knob to ON or OFF the power supply unit, in one embodiment. The PC may further include a charge level indicator 4 to display the current charge status of the battery pack, in one embodiment. The PCB 1 may include the set of pins 12 for convenient mounting of the power supply unit on the UAV 102, according to one embodiment. It may be understood that the functional components, such as sensors, actuators, number of contact plates 2, electrical paths, and such aspects are based upon specification of the power supply. Fig. 5 describes mere illustration which should be viewed and considered in a non-limiting way. Structure, characteristics, specifications, and all technical aspects of the PCB 1 may vary based upon different implementations of the power supply unit.

## Claims

1. A detachable power supply unit comprising:
at least two battery cells bonded in at least one battery pack, wherein first battery cell and second battery cell from the at least one battery pack are installed at opposite poles with respect to each other;
a switch plate electrically coupled to the at least one battery pack and a power supply control unit to combine all battery cells from the battery pack into one electrical circuit;
a power supply control board, comprising:
a switch knob and a switching circuit that breaks the power supply circuit when the power supply is installed;
a power supply charge indicator for displaying a charge level of all battery cells from the at least one battery pack in the power supply in aggregate;
a set of pin contacts for the power supply unit connection; and
contact plate with first surface soldered to the control board and connected to the corresponding power channels on the control board and second side welded to the cell contacts to provide a low resistance contact and secure battery cells fastening,
and wherein at least one battery pack is welded to the contact plate.

2. The apparatus of claim 1, wherein the at least one battery pack can have more than two battery cells, aligned along the longitudinal axis and bonded together using at least one of adhesive, tape, and glue.

3. The apparatus of claim 1, wherein each battery cell from the at least one battery pack is aligned in a form of pyramid.

4. The apparatus of claim 1, wherein the power supply control board can be implemented as a printed circuit board (PCB).

5. The apparatus of claim 1, wherein the contact plate can be made of nickel alloy.

6. The apparatus of claim 1, where a second surface of the first contact plate and a second surface of the second contact plate is soldered to the power supply control board.

7. The apparatus of claim 1, comprises a first insulating barrier having a front surface of the first insulating barrier attached to second side of battery cell contacts, and a back surface of the first insulating barrier welded with battery cells terminals.

8. The apparatus of claim 7, comprises a second insulating barrier encapsulating the first insulating barrier.

9. The apparatus of claim 1, wherein the at least two battery cells are bonded to have a minimum distance in between, and wherein each battery cell is located to provide the minimum dimensions of the at least one group and bonded cells in aggregate in all directions;

10. An Unmanned Ariel Vehicle (UAV 102) comprising:
a propulsion unit;
a power consumption unit;
a detachable power supply unit for supplying the power to the propulsion unit and the power consumption unit; the detachable power supply unit comprises:
at least two battery cells bonded in at least one battery pack, wherein first battery cell and second battery cell from the at least one battery pack are installed at opposite poles with respect to each other;
a switch plate electrically coupled to the at least one battery pack and a power supply control unit to combine all battery cells from the battery pack into one electrical circuit;
a power supply control board, comprising:
a switch knob and a switching circuit that breaks the power supply circuit when the power supply is installed;
a power supply charge indicator for displaying a charge level of all battery cells from the at least one battery pack in the power supply in aggregate;
a set of pin contacts for connecting the power supply unit to UAV 102; and
contact plate with first surface soldered to the control board and connected to the corresponding power channels on the control board and second side welded to the cell contacts to provide a low resistance contact and secure battery cells fastening, wherein at least one contact plate is welded to at least one battery cell of the at least one battery pack.
